# EUROPEAN PATENT APPLICATION

(11) **EP 2 468 549 A1**
(43) Date of publication of application: **27.06.2012**
(21) Application number: 10012746.3
(22) Date of filing: 22.12.2010
(51) Int. Cl.: B60J 7/08

(54) **A covering system for skip containers**

(71) Applicant: Hines, Steve Williams, Swanley Kent BR8 8EE (GB)
(72) Inventor: Watson, Daniel Lawrence, Swanley Kent BR8 8EE (GB)
(74) Representative: Sayer, Robert David

(57) **Abstract**

An automated covering system for skip containers mounted upon a skip container loading vehicle that includes a means of securing a tarpaulin or cover (e) to contain the load at both the front and rear of skip containers using a pivoted secondary framework (c) to secure the front, mounted off a primary spring driven framework (a) which secures the rear.

## Description

Skip containers need to be covered to contain loose materials like sand or rubbish, this covering process is made safer, faster and more efficient by using an apparatus mounted upon the skip container hauling equipment.

An effective skip container cover should be one which is easily operated by the truck driver so as to selectively cover and uncover various size containers from a convenient location near or within the vehicle cab while tightly sealing both the front and rear of the angled skip container to prevent wind passing under the skip cover and disturbing the contents of the angle-sided skip.

None of the existing configurations are designed to be fitted to skip loading equipment or use a winding mechanism mounted on a high bracket to extend and retract a cover by means of a pivoting framework over different height containers whilst pushing down on the cover at the front to secure the lowest points of both the front and rear angled sides of various and different sizes of angle-sided skip containers.

### Summary

A skip container cover mounted to a skip loading vehicle provides a means of simultaneously securing both the front and rear ends of a flexible cover over the variety of different sized angle-sided skip containers which a skip vehicle may deliver and collect.

A reel or winding assembly, on which the cover can be wound by any means possible, is secured at an elevated height to the front of the skip equipment headboard.

A main pivoting framework is secured to both sides of the skip truck and the exposed end of a flexible cover.

A spring assembly mounted upon a raised frame over the main equipment lifting cylinders secures a pivoting assembly to each side of the skip loader so as to bias the main pivoting framework toward the rear of the truck. The spring assembly includes a tension spring which is attached to the main pivoting framework via a pivot bracket through which the spring force is submitted the force of which will decrease or increase dependent on how close the framework is to the winding mechanism.

A secondary framework is provided which is pivoted off the main framework and is mounted so it sits above the cover and straddles the cover so as to press downward on the front end of the cover allowing it to be able to sit parallel and horizontal to the skip bed when the cover is extended over the skip equipment bed. The secondary framework is lifted up by the cover when the winding assembly retracts the cover against the force of the spring tension.

It is the primary objective of this invention to provide a container cover which selectively covers and uncovers different sizes of skip containers with a flexible cover that can be wound on a reel at an elevated position at the front of the skip equipment allowing the cover to be extended over high containers while simultaneously pressing downward on the front of the cover to secure low containers also at the front and rear of various sized loads.

It is another objective to provide a skip cover which is stored on a winding assembly mounted in a high position on a framework on the headboard of skip equipment at the front and which has an edge biased toward the rear of the skip vehicle. A pivoting framework attached to the cover uses spring tension which reduces in bias force as the framework travels towards the rear of the skip vehicle and increases as it is wound onto the winding assembly.

### Description of Drawings

The main framework **4** is attached directly to the spring assembly **1**

The secondary framework **5** is pivoted from framework **4**

A spring assembly **1** mounted to a frame **2** on both sides of the skip vehicle above the lifting cylinders is offering force rearward

Spring assemblies are mounted in an elevated position to allow appropriate height for larger containers **2** Winding mechanism **3** pulls against the spring tension which is offering force towards the rear.

Spring tension is set to be more powerful when the main framework **4** is at the front of the vehicle and will naturally reduce towards the rear.

Secondary framework **5** is lifted by the sheet as it tightens under the increased spring tension as the main arm is retracted

Winding mechanism **3** is mounted in a high elevated position to allow an increased angle of elevation over larger containers

Stopping mounts **6** stop the main framework at the rear of the skip equipment allowing secondary framework 5 to lower naturally under the slackened cover **9.**

Secondary framework pivot **7**

Cover **8**

**10** Natural angle of pivot

**11** Angled skip container, vary in size and shape

**12** Front lip of container

**13** Rear lip of container

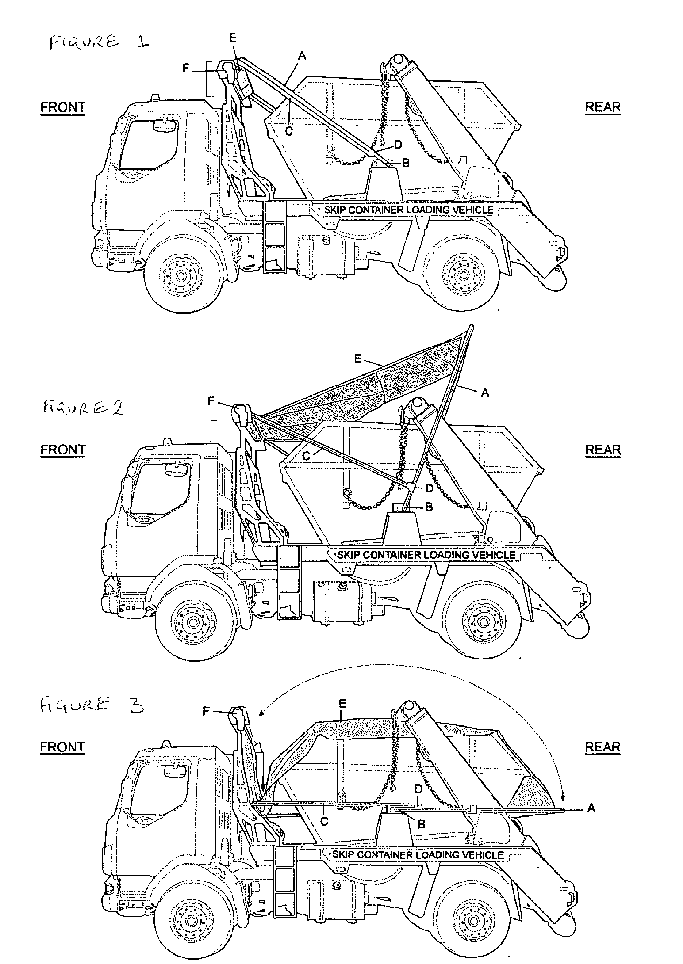

## Claims

1. A covering system for skip containers mounted to a skip container loading vehicle comprising of an initial framework (a) that is attached to two spring driven fixed pivots (b) that are mounted on both sides of the vehicle and set so as to provide pressure on the initial framework (a) so it favours travel towards the rear of a skip container loading vehicle, this pressure is counteracted by a motor driven spool (f) at the front of the vehicle that winds a tarpaulin or cover (e) attached to both the motor driven spool (f) and the initial framework (a) so that the initial framework (a) travels in an arc towards both the front and rear of the vehicle in an arc motion depending on the requested drive action of the motor driven spool (f) thus covering and uncovering the skip containers whilst on the vehicle, a secondary framework (c) is then pivoted from two axis points mounted on brackets from the initial framework (d) and is lifted and lowered by the requested increase and decrease in tension as the motor driven spool (f) works to lift and lower the initial framework (a).

2. A covering system for skip containers according to claim 1, in which a secondary framework (c) pivoting from a primary framework (a) is used to secure the tarpaulin or cover (e) at the front of the load, thus securing both the rear of the load with the primary framework (a) and the front of the load with the secondary framework (c).

3. A covering system for skip containers according to claim 1 that uses a motor (f) to wind a tarpaulin or cover (e) attached to both a motor driven spool and the original spring driven pivoted framework (a) onto and off of the spool so that the spring driven pivoted framework (a) can lift the tarpaulin in an arc over a skip container, thus covering and uncovering the load.

4. A covering system for skip containers according to claim 1, in which the tarpaulin or cover (e) when wound or unwound by the electric motor (f) onto and off of the spool increases and decreases the tension, lifting and lowering both the secondary framework (c) and the spring driven pivoted framework (a) in relation to the drive of the motor (f) driven spool.
